(19) Europäisches Patentamt
European Patent Office
Office européen des brevets

(11) **EP 2 615 432 A1**

(12) **EUROPEAN PATENT APPLICATION**

(43) Date of publication:
17.07.2013 Bulletin 2013/29

(51) Int Cl.:
*G01F 25/00* (2006.01)      *G01M 3/32* (2006.01)

(21) Application number: 13150245.2

(22) Date of filing: 04.01.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 10.01.2012 US 201213346887

(71) Applicant: General Electric Company
Schenectady, New York 12345 (US)

(72) Inventors:
• **Hains, John Victor**
**Greenville, SC 29615 (US)**

• **Gu, Yili**
**Schenectady, NY 12345 (US)**
• **Singh, Harpal**
**Greenville, SC 29615 (US)**
• **Vandevelde, John Patrick**
**Greenville, SC 29615 (US)**
• **Whitright, Brian James**
**Greenville, SC 29615 (US)**

(74) Representative: **Cleary, Fidelma et al**
**GE International Inc.**
**Global Patent Operation-Europe**
**15 John Adam Street**
**London WC2N 6LU (GB)**

(54) **Fluid leak detection system**

(57)      A fluid leak detection system (210) is provided, and includes a fluid conduit (220), a fluid-cooled device (230) having an inlet and an outlet, an inlet flow meter (224), an outlet flow meter (234), and a controller (250). The inlet flow meter and inlet flow meters (224,234) are fluidly connected to the fluid conduit. The inlet flow meter (224) monitors the inlet of the fluid-cooled device for an inlet temperature and an inlet flow rate. The inlet and outlet flow meters (224,234) each have flow meter drift versus process fluid temperature curves as well as drift versus ambient temperature curves, wherein the curves for the inlet flow meter (224) differ from the outlet flow meter (234). The outlet flow meter (234) monitors the outlet of the fluid-cooled device for an outlet temperature and an outlet flow rate. The controller (250) is in communication with the inlet flow meter (224) and the outlet flow meter (234).

FIG. 2

EP 2 615 432 A1

**Description**

The subject matter disclosed herein relates generally to a fluid leak detection system, and more specifically to a fluid leak detection system having a controller with control logic for monitoring the fluid leak detection system and determining if a leak condition exists.

Traditionally, gas turbine flame detectors have been used to ensure the presence of a flame during gas turbine light-off and operation. Some flame detectors employ a cooling coil that uses water (which may contain a mixture of various anti-freeze constituents) as a cooling medium to keep a flame detector sensor below a threshold temperature. However, a leak may occur in the cooling water circuit. Leakage of the cooling water may cause the casing of the gas turbine or components located within the casing to need replacement. Replacement of the casing or the components located within the casing may become time-consuming and costly.

Cooling water may also be employed to cool a liquid fuel purge system as well in a gas turbine. Specifically, cooling water may be used to cool a three way liquid fuel valve. Cooling water may also be employed to cool check valves of the liquid fuel purge system. Specifically, cooling water is used to maintain an internal check valve or three way valve temperature below the coking threshold of the liquid fuel. However, a leak may also occur in the cooling water circuit of the liquid fuel purge system, which may also cause the water cooled valve to operate incorrectly. The leak may also cause casing or other gas turbine component issues.

According to one aspect of the invention, a fluid leak detection system is provided and includes a fluid conduit, a fluid-cooled device having an inlet and an outlet, an inlet flow meter, an outlet flow meter, and a controller. The inlet flow meter is fluidly connected to the fluid conduit. The inlet flow meter monitors the inlet of the fluid-cooled device for an inlet temperature and an inlet flow rate. The inlet flow meter has an inlet flow meter drift versus process fluid temperature curve and an inlet flow meter drift versus ambient temperature curve. The outlet flow meter is fluidly connected to the fluid conduit. The outlet flow meter monitors the outlet of the fluid-cooled device for an outlet temperature and an outlet flow rate. The outlet flow meter has an outlet flow meter drift versus process fluid temperature curve and an outlet flow meter drift versus ambient temperature curve. The controller is in communication with the inlet flow meter and the outlet flow meter. The controller includes a memory having the inlet flow meter and outlet flow meter drift curves stored therein. The inlet flow meter drift versus process fluid temperature curve being different from the outlet flow meter drift versus process fluid temperature curve and the inlet flow meter drift versus ambient temperature curve being different than the outlet flow meter drift versus ambient temperature curve. A zero flow condition where flow of fluid in the fluid conduit is substantially halted and the inlet flow rate and the outlet flow rate are saved in the memory of the controller as well.

The controller includes control logic for monitoring the ambient temperature, inlet flow meter for the inlet temperature and the inlet flow rate and the outlet flow meter for the outlet temperature and the outlet flow rate. The controller also includes control logic for compensating measurement drift due to the temperature of the process fluid and from the ambient temperature and the percentage of error in the respective flow rates. Specifically, the controller includes control logic for determining the difference between the inlet temperature and the outlet temperature. The memory of the controller includes a set of data stored therein that indicates a percentage of error in flow rate based on the difference between the inlet temperature and the outlet temperature. The controller further includes control logic for determining the difference between the inlet flow rate and the outlet flow rate. The controller includes control logic for calculating an actual flow rate difference between the inlet flow rate and the outlet flow rate. The actual flow rate difference is based on the percentage of error in flow rate, the difference between the inlet flow rate and the outlet flow rate, and the zero flow condition. The controller also includes control logic for indicating a leak condition in the fluid leak detection system if the actual flow rate difference is above a threshold value.

According to another aspect of the invention, a turbine is provided having a fluid leak detection system that includes a fluid conduit, and a fluid-cooled device having an inlet and an outlet. An inlet flow meter is fluidly connected to the fluid conduit, the inlet flow meter monitoring the inlet of the fluid-cooled device for an inlet temperature and an inlet flow rate, the inlet flow meter having an inlet flow meter drift versus process fluid temperature curve and an inlet flow meter drift versus ambient temperature curve. An outlet flow meter is fluidly connected to the fluid conduit, the outlet flow meter monitoring the outlet of the fluid-cooled device for an outlet temperature and an outlet flow rate, the outlet flow meter having an outlet flow meter drift versus process fluid temperature curve that is different than the inlet flow meter drift versus process fluid temperature curve and an outlet flow meter drift versus ambient temperature curve that is different from the inlet flow meter drift versus ambient temperature curve. A shutoff valve is fluidly connected to and selectively blocks a fluid flow through the fluid conduit.

Various advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a schematic diagram of an embodiment of a gas turbine system;

FIG. 2 is an exemplary schematic illustration of a fluid leak detection system; and

FIG. 3 and FIG. 4 are graphs plotting temperature and accuracy for exemplary flow meters.

The detailed description explains embodiments of the invention, together with advantages and features, by way of example with reference to the drawings.

As used herein the terms module and sub-module refer to an application specific integrated circuit (ASIC), an electronic circuit, a processor (shared, dedicated, or group) and memory that executes one or more software or firmware programs, a combinational logic circuit, and/or other suitable components that provide the described functionality. For example, controllers or control modules may include one or more such modules.

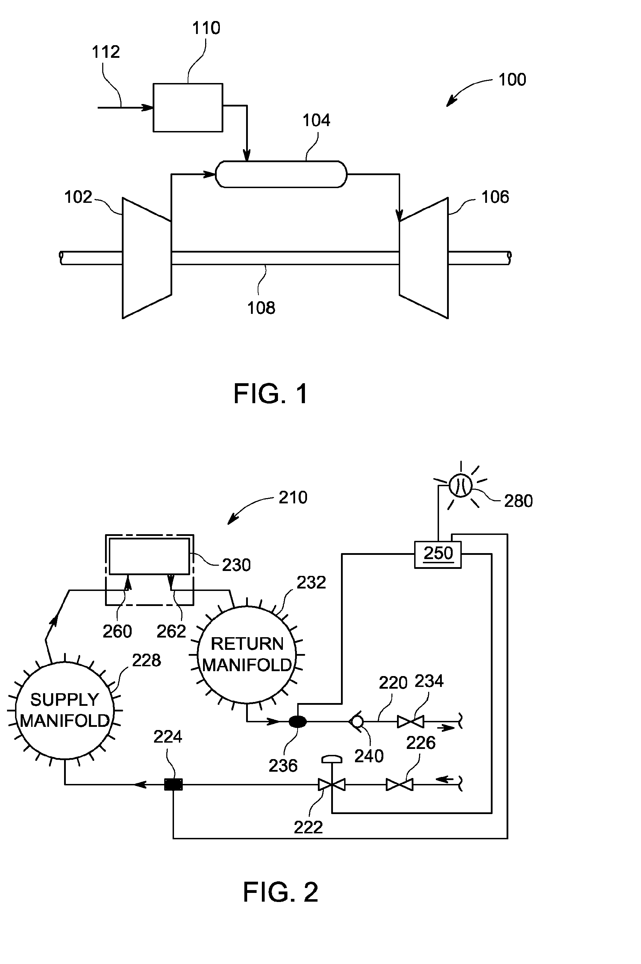

FIG. 1 is a schematic diagram of an embodiment of a gas turbine system 100. The system 100 includes a compressor 102, a combustor 104, a turbine 106, a shaft 108 and a fuel nozzle 110. In an embodiment, the system 100 may include a plurality of compressors 102, combustors 104, turbines 106, shafts 108 and fuel nozzles 110. As depicted, the compressor 102 and turbine 106 are coupled by the shaft 108. The shaft 108 may be a single shaft or a plurality of shaft segments coupled together to form shaft 108.

In an aspect, the combustor 104 uses liquid and/or gas fuel, such as natural gas or a hydrogen rich synthetic gas, to run the turbine engine. For example, fuel nozzles 110 are in fluid communication with a fuel supply and pressurized air from the compressor 102. The fuel nozzles 110 create an air-fuel mix, and discharge the air-fuel mix into the combustor 104, thereby causing a combustion that creates a hot pressurized exhaust gas. The combustor 104 directs the hot pressurized exhaust gas through a transition piece into a turbine nozzle (or "stage one nozzle"), causing turbine 106 rotation as the gas exits the nozzle or vane and gets directed to the turbine bucket or blade. The rotation of turbine 106 causes the shaft 108 to rotate, thereby compressing the air as it flows into the compressor 102.

FIG. 2 is an illustration of an exemplary fluid leak detection system indicated by reference number 210. The fluid leak detection system 210 includes a fluid conduit 220, a shutoff valve 222, an inlet flow meter 224, an inlet valve 226, a supply manifold 228, a fluid-cooled device 230, a return manifold 232, an outlet valve 234, an outlet flow meter 236, and a check valve 240. In one exemplary embodiment, the fluid leak detection system 210 is part of a cooling circuit employed in a gas turbine and the fluid-cooled device 230 is a gas turbine flame detector that detects the presence of a flame during gas turbine light-off and operation. Alternatively, in another exemplary embodiment the fluid-cooled device 230 may be employed in a liquid fuel purge system, where the fluid-cooled device 230 is either a three way liquid fuel valve or a check valve. However, it is to be understood that the fluid leak detection system 210 may be used in a variety of applications. One application is for use with the gas turbine system 100 shown in FIG. 1. In one embodiment a cooling medium such as, for example, water may flow through the fluid conduit 220 and is used to conduct heat away from the fluid-cooled device 230. Water may include any suitable water solution where additives are added to the water to provide desired characteristics for an application.

In an embodiment, the inlet valve 226 is a manual valve that is fluidly connected to the fluid conduit 220 and is open during operation of the fluid leak detection system 210. The shutoff valve 222 is located downstream of the inlet valve 226 and is fluidly connected to and selectively blocks or restricts the fluid flow through the fluid conduit 220. Specifically, the shutoff valve 222 is employed to substantially block the flow of fluid to the fluid leak detection system 210 based on certain operating conditions. Downstream of the shutoff valve 222 is the inlet flow meter 224. In one embodiment, the inlet flow meter 224 is a Coriolis flow meter that measures the mass flow rate of fluid traveling through the fluid conduit 220. However, it is to be understood that other types of flow meters from various manufacturers may be used as well. The inlet flow meter 224 monitors an inlet 260 that is fluidly connected the fluid-cooled device 230 for an inlet temperature and an inlet flow rate. The supply manifold 228 is located downstream of the inlet flow meter 224, where the inlet flow meter 224 measures the flow rate and the temperature into the supply manifold 228.

An outlet 262 of the fluid-cooled device 230 is fluidly connected to the return manifold 232. The return manifold 232 is located upstream of the outlet flow meter 236. In one embodiment, the outlet flow meter 236 is a Coriolis flow meter that measures the mass flow rate of the fluid traveling through the fluid conduit 220. However other types of flow meters may be used as well. In an embodiment, the inlet flow meter 224 is provided by a first manufacturer while the outlet flow meter 236 is provided by a second manufacturer. The outlet flow meter 236 monitors the outlet 262 of the fluid-cooled device 230 for an outlet temperature and an outlet flow rate. The outlet flow meter 236 is situated upstream of the check valve 240. The check valve 240 is employed to prevent the ingression of contaminants into the fluid leak detection system 210, and is also employed to reduce or substantially prevent the occurrence of backflow into the fluid conduit 220. The check valve 240 is located upstream of the outlet valve 234. In an embodiment, the outlet valve 234 is a manual valve that is normally open during operation of the fluid leak detection system 210. The inlet valve 226 and the outlet valve 226 may be isolation valves employed during maintenance or system issues.

The inlet flow meter 224 and the outlet flow meter 236 are both configured for monitoring fluid temperature and fluid flow rate of the fluid conduit 220 at their respective locations. The drift versus process fluid temperature curve and drift versus ambient temperature curve represents the change in flow rate measurement accuracy of a flow meter that is caused by changes in process and ambient temperature. In one embodiment, the inlet flow meter 224 and the outlet flow meter 236 are different types of flow meters. Flow meter types include, but are not limited to, the following examples, Coriolis, orifice, ultrasonic, Venturi and V-cone flow meters. In embodiments, the inlet flow meter 224 and outlet flow meter 236 may be provided by different manufacturers, where the flow meter types may be the same or different. The inlet flow meter 224 and the outlet flow meter 236 may each have different drift versus process fluid curves and drift versus ambient temperature curves provided by the manufacturer and are used to improve measurement accuracy.

A Coriolis flow meter is also referred to as a mass flow meter or inertial flow meter and is a device that measures how much liquid is flowing through a tube by measuring the amount of mass flowing through the device. In orifice flow meters, fluid passing though an orifice constriction experiences a drop in pressure across the orifice. This pressure change can be used to measure the flow rate of the fluid. Ultrasonic flow meters measure the velocity of a fluid by using the principle of ultrasound by using sensors, such as ultrasonic transducers. Venturi flow meters include a Venturi tube where fluid flow rate is measured by reducing the cross sectional flow area in the flow path which generates a pressure difference, where the pressure difference is used to determine the flow rate. V-cone flow meters also use a pressure differential measurement in a flow path to determine flow rate.

With continued reference to FIG. 2, a controller 250 is provided and is in communication with the shutoff valve 222, the inlet flow meter 224, and the outlet flow meter 236. Specifically, the controller 250 includes control logic for monitoring the inlet flow meter 224 and the outlet flow meter 236, as well as control logic for selectively actuating the shutoff valve 222. In one exemplary embodiment, the controller 250 is a turbine controller that is employed for controlling various functions of a turbine such as fuel and emissions control, as well as other functions of a gas turbine. The controller 250 includes a memory as well, where the drift versus process fluid temperature curves and drift versus ambient temperature curves, accuracy and tolerance of both the inlet flow meter 224 and the outlet flow meter 236 are stored in the memory of the controller 250. For example, the controller may have a program or control logic that uses the tolerances and drift versus process fluid temperature curves and drift versus ambient temperature curves for the inlet and outlet flow meter 224, 236 to account for error due to temperature changes for each meter. Further, by using the controller 250 to account for differing flow meters and drift curves, the system enables flexible replacement of flow meters, wherein a meter can be replaced with a different type or brand of flow meter. The replacement flow meter may be installed and the corresponding drift versus process fluid temperature curve, and drift versus ambient temperature curve, accuracy and/or tolerance information are altered to account for the flow meter change.

The memory of the controller 250 also includes a zero flow condition, where fluid flow in the fluid conduit 220 is substantially halted, and the inlet flow rate at the inlet 260 and the outlet flow rate at the outlet 262 are compared to one another and stored in the memory of the controller 250. Specifically, during zeroing of the controller 250, the flow of fluid through the fluid conduit 220 is substantially halted for a specified period of time where the fluid conduit 220 is filled with fluid. As a result, there is substantially zero flow of fluid through the fluid conduit 220, which may lead to a corresponding reading of zero flow output by both the inlet flow meter 224 and the outlet flow meter 236. However, sometimes the inlet flow meters 224 and outlet flow meters 36 may produce a non-zero flow rate during a time of substantially zero flow. In this case, the non-zero flow rate from the inlet flow meters 224 and outlet flow meters 236 may be used as the zero flow condition.

The memory of the controller 250 also includes a set of data that indicates a percentage of error in flow rate in the fluid conduit 220 based on the temperature at the inlet 260 and the outlet 262. The difference in temperature between the inlet 260 and the outlet 262 is typically referred to as the sensing drift difference between the inlet flow meter 224 and the outlet flow meter 236. As the difference between the temperature at the inlet 260 and the outlet 262 increase, the percentage of error in flow rate in the fluid conduit 220 increases. The percentage of error in the flow rate may be based on the maximum flow rate in the fluid conduit 220.

The controller 250 includes control logic for monitoring the inlet flow meter 224 for the inlet temperature and flow rate at the inlet 260, and the outlet flow meter 236 for the outlet temperature and flow rate at the outlet 262. The controller 250 includes control logic for determining the difference between the inlet temperature from the inlet flow meter 224 and the outlet temperature from the outlet flow meter 236. The controller 250 also includes control logic for determining the difference between the inlet flow rate from the inlet flow meter 224 and the outlet flow rate from the outlet flow meter 236.

The controller 250 further includes control logic for calculating an actual flow rate difference between the inlet flow meter 224 and the outlet flow meter 236. Specifically, the actual flow rate difference represents the real difference between the flow of fluid in the fluid conduit 220 at the inlet flow meter 224 and the outlet flow meter 236 during operation of the fluid leak detection system 210. The controller 250 calculates the actual flow rate difference based on the percentage of error in flow rate (from the drift versus process fluid temperature curves and drift versus ambient temperature curves), the zero flow condition, and the difference between the inlet flow rate from the inlet flow meter 224 and the outlet flow rate from the outlet flow meter 236. The actual flow rate difference may be calculated by subtracting the inlet flow $Flow_{in}$ from the outlet flow Flowout. The inlet flow meter 224 and the outlet flow meter 236 have different errors and tolerances, wherein the controller 250 accounts for these differences due to the differing meter types and/or manufacturers. Moreover, when the flow of fluid in the fluid conduit 220 is substantially halted, then

$$m_{readi} = m_{actuali} + m_{errori} \approx 0$$

and

$$m_{reado} = m_{actualo} + m_{erroro} \approx 0$$

where $m_{errori}$ is the error of the mass flow rate at the inlet flow meter 224, $m_{erroro}$ is the error of the mass flow rate at the outlet flow meter 236, $m_{readi}$ is the mass flow rate reading by the inlet flow meter 224, $m_{actuali}$ is the actual mass flow rate at the inlet flow meter 224, and $m_{errori}$ is the error in mass flow rate at the inlet flow meter 224 read by the controller 250. This zero flow condition is used to provide a calibration of the inlet flow meter 224 and outlet flow meter 236. Also, $m_{reado}$ is the mass flow rate reading by the outlet flow meter 236, $m_{actualo}$ is the actual mass flow rate at the outlet flow meter 236, and $m_{erroro}$ is the error in mass flow rate at the inlet flow meter 236 read by the controller 250. In the event there is fluid flow through the fluid conduit 220 and the fluid leak detection system 210 is substantially leak free, then:

$$m_{readi} - m_{reado} = m_{actuali} - m_{actualo} + (m_{errori} - m_{erroro}) \approx 0 \, ,$$

and

$$\frac{m_{readi}}{m_{reado}} = \frac{m_{actuali} + m_{errori}}{m_{actualo} + m_{erroro}} \approx 1$$

The controller 250 includes control logic for indicating a leak condition in the fluid leak detection system 210 if the actual flow rate difference is above a threshold value. For example, in one embodiment if the difference between the mass flow rate $m_{readi}$ read by the inlet flow meter 224 and the mass flow rate $m_{reado}$ read by the outlet flow meter 236 is above the threshold value, then the controller 250 determines that a leak condition in the fluid leak detection system 210 has occurred. Specifically, in one embodiment the fluid leak detection system 210 includes an indicator or an alarm 280 that is in communication with the controller 250, where the alarm 280 emits a visual indicator or sound to alert an operator that a leak condition has occurred. In one example, the controller 250 may also be in communication with a computing screen, which is not illustrated, where the controller 250 sends a signal to the screen to display a visual indicator that informs an operator that the leak condition has occurred.

Several types of leak conditions may exist. In one embodiment, the controller 250 may include control logic for calculating a level one leak condition, which occurs if the actual flow rate difference is above a level one threshold value. In this situation, the controller 250 includes control logic for sending a signal to the alarm 280. The alarm will then emit a level one tone or visual indicator. A level two leak condition may occur as well if the actual flow rate difference is above a level two threshold value. The level two threshold value is greater than the level one threshold value. During the level two leak the controller 250 includes control logic for sending a signal to the alarm 280 for emitting a level two tone or indicator. The level two tone or indicator is typically louder or brighter than the level one tone or indictor, in an effort to alert an operator of a leak condition that may require greater attention.

In addition to the alarm 280, two different approaches may be used as well if the level two leak condition occurs. In a first approach, the controller 250 is in communication with a turbine (not shown) for sending a signal to the turbine indicating that a turbine shutdown condition is created or induced in an effort to substantially reduce the risk of turbine trip and to reduce the amount of fluid leakage. The turbine shutdown condition enables the turbine to shut down safely and restrict or block fluid flow to the sensor. Alternatively, in another embodiment the controller 250 further includes control logic for sending a signal to the shutoff valve 222 to substantially block the flow of fluid to the inlet 260 of the fluid-cooled device 230. Thus, in the event a leak is detected, fluid may no longer flow through the fluid conduit 220, which may reduce the occurrence of fluid leakage in the system.

In embodiments, the depicted fluid leak detection system 210 provides a system for detecting fluid leaks in portions of a gas turbine system, such as a cooling circuit for a gas flame detector, wherein differing flow meters 224, 236 are provided. The system's controller 250 is configured to adjust for differences in error and tolerance between the different flow meters, which provides flexibility in system architecture and maintenance. For example, if the inlet flow meter 224 and outlet flow meter 236 are initially provided as the same type and manufacturer, but the inlet flow meter 224 fails, the system enables replacement of the inlet flow meter 224 with a different type of meter. This flexibility may be useful when certain flow meters are in stock or a type or brand of flow meter is discontinued.

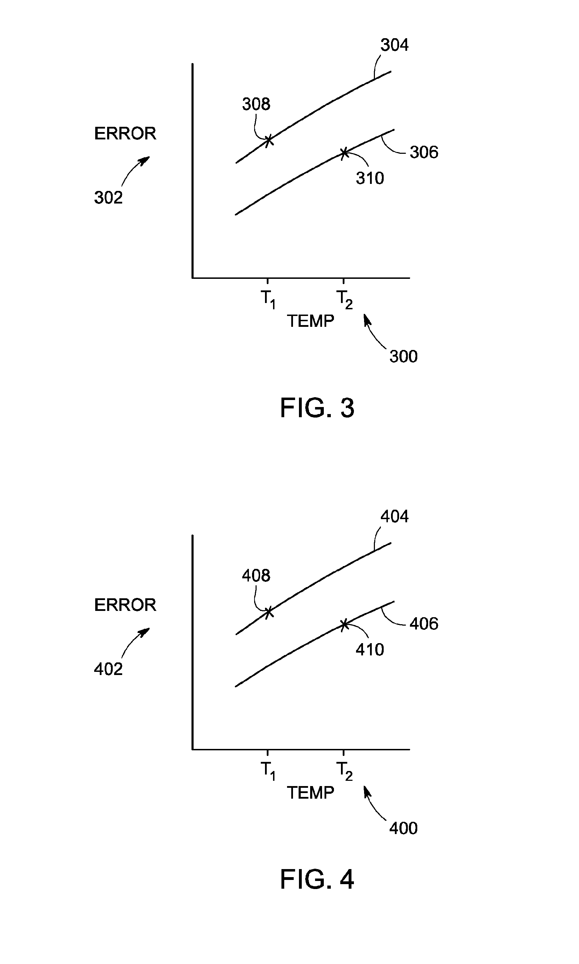

FIG. 3 is a graph of temperature and accuracy for exemplary inlet and outlet flow meters showing drift versus process fluid temperature curves. Temperature 300 is plotted on the x-axis while error (as a % of max flow rate) 302 is plotted on the y-axis. A first curve 304 is an inlet flow meter drift versus process fluid temperature curve while a second curve 306 is an outlet flow meter drift versus process fluid temperature curve. Point 308 represents the error of the inlet flow meter at a first temperature, $T_1$, for the process fluid flow. Point 310 represents the error of the outlet flow meter at a second temperature, $T_2$, for the process fluid flow. For example, the cooling fluid enters the cooling circuit at $T_1$ and is measured by an inlet flow meter, where the controller uses the graph point 308 to account for the error at $T_1$. In addition, the cooling fluid exits the cooling circuit at $T_2$, where the controller uses graph point 310 to account for outlet flow meter error due to the process fluid temperature. The illustrated graph represents information that may be used by the controller 250 to take flow measurements while compensating for drift errors.

FIG. 4 is a graph of temperature and accuracy for exemplary inlet and outlet flow meters showing drift versus ambient temperature curves. Temperature 400 is plotted on the x-axis while error (as a % of max flow rate) 402 is plotted on the y-axis. A first curve 404 is an inlet flow meter drift versus ambient temperature curve while a second curve 406 is an outlet flow meter drift versus ambient temperature curve. Point 408 represents the error of the inlet flow meter at a first ambient temperature, $T_1$. Point 410 represents the error of the outlet flow meter at a second ambient temperature, $T_2$. For example, the cooling fluid enters the cooling circuit proximate the inlet flow meter which has the $T_1$ ambient temperature and measures flow by an inlet flow meter, where the controller uses the graph point 408 to account for the error at $T_1$. In addition, the cooling fluid exits the cooling circuit proximate the outlet flow meter, where the controller uses graph point 410 to account for outlet flow meter error due to ambient temperature $T_2$. The illustrated graph represents information that may be used by the controller 250 to take flow measurements while compensating for drift errors.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:

1. A fluid leak detection system, comprising:

a fluid conduit;

a fluid-cooled device having an inlet and an outlet;

an inlet flow meter fluidly connected to the fluid conduit, the inlet flow meter monitoring the inlet of the fluid-cooled device for an inlet temperature and an inlet flow rate, the inlet flow meter having an inlet flow meter drift versus process fluid temperature curve and an inlet flow meter drift versus ambient temperature curve;

an outlet flow meter fluidly connected to the fluid conduit, the outlet flow meter monitoring the outlet of the fluid-cooled device for an outlet temperature and an outlet flow rate, the outlet flow meter having an outlet flow meter drift versus process fluid temperature curve and an outlet flow meter drift versus ambient temperature curve;

a controller in communication with the inlet flow meter and the outlet flow meter, the controller including a memory having the inlet flow meter drift versus process fluid temperature curve, the inlet flow meter drift versus ambient temperature curve, the outlet flow meter drift versus process fluid temperature curve and the outlet flow meter drift versus ambient temperature curve stored therein, the inlet flow meter drift versus process fluid temperature curve being different than the outlet flow meter drift versus process fluid temperature curve and the inlet flow meter drift versus ambient temperature curve being different than the outlet flow meter drift versus ambient temperature curve, and a zero flow condition where a fluid flow in the fluid conduit is substantially halted and values of the inlet flow rate and the outlet flow rate are saved in the memory of the controller, the controller including:

a control logic for monitoring the inlet flow meter for the inlet temperature and the inlet flow rate and the outlet flow meter for the outlet temperature and the outlet flow rate;

a control logic for determining the difference between the inlet temperature and the outlet temperature, the memory of the controller including a set of data stored therein that indicates a percentage of error in flow rate based on the difference between the inlet temperature and the outlet temperature;

a control logic for determining the difference between the inlet flow rate and the outlet flow rate;

a control logic for calculating an actual flow rate difference between the inlet flow rate and the outlet flow rate, the actual flow rate difference based on the percentage of error in flow rate, the difference between the inlet flow rate and the outlet flow rate, and the zero flow condition; and

a control logic for indicating a leak condition in the fluid leak detection system if the actual flow rate difference is above a threshold value.

2. The fluid leak detection system of clause 1, further comprising an inlet valve fluidly connected to the fluid conduit an outlet valve fluidly connected to the fluid conduit, wherein the inlet valve and the outlet valve are manual valves.

3. The fluid leak detection system of any preceding clause, further comprising a shutoff valve fluidly connected to and selectively blocking the fluid flow through the fluid conduit.

4. The fluid leak detection system of any preceding clause, wherein the controller is in communication with the shutoff valve, and wherein the controller includes control logic for selectively sending a signal to the shutoff valve to substantially block the flow of fluid to the inlet of the fluid-cooled device.

5. The fluid leak detection system of any preceding clause, wherein the threshold value further includes a level one threshold value and a level two threshold value, wherein the level two threshold value is greater than the level one threshold value.

6. The fluid leak detection system of any preceding clause, wherein if the controller detects the level one threshold value, then controller includes control logic for sending a signal to an alarm, wherein the signal instructs the alarm to emit one of a level one tone and a level one visual indicator.

7. The fluid leak detection system of any preceding clause, wherein if the controller detects the level two threshold value, then controller includes control logic for sending a signal to an alarm, wherein the signal instructs the alarm to emit one of a level two tone and a level two visual indicator.

8. The fluid leak detection system of any preceding clause, wherein if the controller detects the level two threshold value, then controller includes control logic for sending a signal to the shutoff valve to substantially block the flow of fluid to the inlet of the fluid-cooled device.

9. The fluid leak detection system of any preceding clause, wherein if the controller detects the level two threshold value, then controller includes control logic for sending a signal to a turbine indicating that a turbine shutdown condition is to be induced.

10. The fluid leak detection system of any preceding clause, further comprising a check valve fluidly connected to the fluid conduit and located downstream of the outlet flow meter.

11. The fluid leak detection system of any preceding clause, wherein the fluid-cooled device is one of a gas turbine flame detector, a three way liquid fuel valve, and a check valve of a liquid fuel purge system.

12. The fluid leak detection system of any preceding clause, wherein the inlet flow meter and the outlet flow meter originate from different manufacturers.

13. The fluid leak detection system of any preceding clause, wherein the inlet flow meter and the outlet flow meter are different types of flow meters.

14. The fluid leak detection system of any preceding clause, wherein the control logic for calculating the actual flow rate difference based on the percentage of error in flow rate comprises control logic to compensate for different drift versus process fluid temperature curves for the inlet flow meter and outlet flow meter.

15. A turbine having a fluid leak detection system, comprising:

a fluid conduit;

a fluid-cooled device having an inlet and an outlet;

an inlet flow meter fluidly connected to the fluid conduit, the inlet flow meter monitoring the inlet of the fluid-cooled device for an inlet temperature and an inlet flow rate, the inlet flow meter having an inlet flow meter drift versus process fluid temperature curve and an inlet flow meter drift versus ambient temperature curve;

an outlet flow meter fluidly connected to the fluid conduit, the outlet flow meter monitoring the outlet of the fluid-cooled device for an outlet temperature and an outlet flow rate, the outlet flow meter having an outlet flow meter drift versus process fluid temperature curve that is different than the inlet flow meter drift versus process fluid temperature curve and an outlet flow meter drift versus ambient temperature curve that is different from the inlet flow meter drift versus ambient temperature curve; and

a shutoff valve fluidly connected to and selectively blocking a fluid flow through the fluid conduit.

16. The turbine of any preceding clause, comprising a controller in communication with the shutoff valve, the inlet flow meter, and the outlet flow meter, the controller including a memory having the inlet flow meter drift versus process fluid temperature curve, the inlet flow meter drift versus ambient temperature curve, the outlet flow meter drift versus process fluid temperature curve and the outlet flow meter drift versus ambient temperature curve stored therein and a zero flow condition where the fluid flow in the fluid conduit is substantially halted and values of the inlet flow rate and the outlet flow rate are saved in the memory of the controller, the controller including:

a control logic for monitoring the inlet flow meter for the inlet temperature and the inlet flow rate and the outlet flow meter for the outlet temperature and the outlet flow rate;

a control logic for determining the difference between the inlet temperature and the outlet temperature, the memory of the controller including a set of data stored therein that indicates a percentage of error in flow rate based on the difference between the inlet temperature and the outlet temperature;

a control logic for determining the difference between the inlet flow rate and the outlet flow rate;

a control logic for calculating an actual flow rate difference between the inlet flow rate and the outlet flow rate, the actual flow rate difference based on the percentage of error in flow rate, the difference between the inlet flow rate and the outlet flow rate, and the zero flow condition;

a control logic for indicating a leak condition in the fluid leak detection system if the actual flow rate difference is above a threshold value; and

a control logic for sending a signal to the shutoff valve to substantially block the flow of fluid to the inlet of the fluid-cooled device in the event the actual flow rate difference is above the threshold value.

17. The turbine of any preceding clause, wherein the control logic for calculating the actual flow rate difference based on the percentage of error in flow rate comprises control logic to compensate for different drift versus process fluid temperature curves for the inlet flow meter and outlet flow meter.

18. The turbine of any preceding clause, wherein the threshold value further includes a level one threshold value and a level two threshold value, wherein the level two threshold value is greater than the level one threshold value and wherein if the controller detects the level one threshold value, then controller includes control logic for sending a signal to an alarm, wherein the signal instructs the alarm to emit one of a level one tone and a level one visual indicator.

19. The turbine of any preceding clause, wherein if the controller detects the level two threshold value, then controller includes control logic for sending a signal to an alarm, wherein the signal instructs the alarm to emit one of a level two tone and a level two visual indicator.

20. The turbine of any preceding clause, wherein if the controller detects the level two threshold value, then controller includes a control logic for sending a signal to the shutoff valve to substantially block the flow of fluid to the inlet of the fluid-cooled device.

**Claims**

1. A fluid leak detection system, comprising:

   a fluid conduit;
   a fluid-cooled device having an inlet and an outlet;
   an inlet flow meter fluidly connected to the fluid conduit, the inlet flow meter monitoring the inlet of the fluid-cooled device for an inlet temperature and an inlet flow rate, the inlet flow meter having an inlet flow meter drift versus process fluid temperature curve and an inlet flow meter drift versus ambient temperature curve;
   an outlet flow meter fluidly connected to the fluid conduit, the outlet flow meter monitoring the outlet of the fluid-cooled device for an outlet temperature and an outlet flow rate, the outlet flow meter having an outlet flow meter drift versus process fluid temperature curve and an outlet flow meter drift versus ambient temperature curve;
   a controller in communication with the inlet flow meter and the outlet flow meter, the controller including a memory having the inlet flow meter drift versus process fluid temperature curve, the inlet flow meter drift versus ambient temperature curve, the outlet flow meter drift versus process fluid temperature curve and the outlet flow meter drift versus ambient temperature curve stored therein, the inlet flow meter drift versus process fluid temperature curve being different than the outlet flow meter drift versus process fluid temperature curve and the inlet flow meter drift versus ambient temperature curve being different than the outlet flow meter drift versus ambient temperature curve, and a zero flow condition where a fluid flow in the fluid conduit is substantially halted and values of the inlet flow rate and the outlet flow rate are saved in the memory of the controller, the controller including:

       a control logic for monitoring the inlet flow meter for the inlet temperature and the inlet flow rate and the outlet flow meter for the outlet temperature and the outlet flow rate;
       a control logic for determining the difference between the inlet temperature and the outlet temperature, the memory of the controller including a set of data stored therein that indicates a percentage of error in flow rate based on the difference between the inlet temperature and the outlet temperature;
       a control logic for determining the difference between the inlet flow rate and the outlet flow rate;
       a control logic for calculating an actual flow rate difference between the inlet flow rate and the outlet flow rate, the actual flow rate difference based on the percentage of error in flow rate, the difference between the inlet flow rate and the outlet flow rate, and the zero flow condition; and
       a control logic for indicating a leak condition in the fluid leak detection system if the actual flow rate difference is above a threshold value.

2. The fluid leak detection system of claim 1, further comprising an inlet valve fluidly connected to the fluid conduit an outlet valve fluidly connected to the fluid conduit, wherein the inlet valve and the outlet valve are manual valves.

3. The fluid leak detection system of any preceding claim, further comprising a shutoff valve fluidly connected to and selectively blocking the fluid flow through the fluid conduit.

4. The fluid leak detection system of claim 3, wherein the controller is in communication with the shutoff valve, and wherein the controller includes control logic for selectively sending a signal to the shutoff valve to substantially block the flow of fluid to the inlet of the fluid-cooled device.

5. The fluid leak detection system of any preceding claim, wherein the threshold value further includes a level one threshold value and a level two threshold value, wherein the level two threshold value is greater than the level one threshold value.

6. The fluid leak detection system of any preceding claim, wherein if the controller detects the level one threshold value, then controller includes control logic for sending a signal to an alarm, wherein the signal instructs the alarm to emit one of a level one tone and a level one visual indicator.

7. The fluid leak detection system of any preceding claim, wherein if the controller detects the level two threshold value, then controller includes control logic for sending a signal to an alarm, wherein the signal instructs the alarm to emit one of a level two tone and a level two visual indicator.

8. The fluid leak detection system of any preceding claim, wherein if the controller detects the level two threshold value, then controller includes control logic for sending a signal to the shutoff valve to substantially block the flow of fluid to the inlet of the fluid-cooled device.

9. The fluid leak detection system of any preceding claim, wherein if the controller detects the level two threshold value, then controller includes control logic for sending a signal to a turbine indicating that a turbine shutdown condition is to be induced.

10. The fluid leak detection system of any preceding claim, further comprising a check valve fluidly connected to the fluid conduit and located downstream of the outlet flow meter.

11. The fluid leak detection system of any preceding claim, wherein the fluid-cooled device is one of a gas turbine flame detector, a three way liquid fuel valve, and a check valve of a liquid fuel purge system.

12. The fluid leak detection system of any preceding claim, wherein the inlet flow meter and the outlet flow meter originate from different manufacturers.

13. The fluid leak detection system of any preceding claim, wherein the inlet flow meter and the outlet flow meter are different types of flow meters.

14. The fluid leak detection system of any preceding claim, wherein the control logic for calculating the actual flow rate difference based on the percentage of error in flow rate comprises control logic to compensate for different drift versus process fluid temperature curves for the inlet flow meter and outlet flow meter.

15. A turbine having a fluid leak detection system, comprising:

a fluid conduit;
a fluid-cooled device having an inlet and an outlet;
an inlet flow meter fluidly connected to the fluid conduit, the inlet flow meter monitoring the inlet of the fluid-cooled device for an inlet temperature and an inlet flow rate, the inlet flow meter having an inlet flow meter drift versus process fluid temperature curve and an inlet flow meter drift versus ambient temperature curve;
an outlet flow meter fluidly connected to the fluid conduit, the outlet flow meter monitoring the outlet of the fluid-cooled device for an outlet temperature and an outlet flow rate, the outlet flow meter having an outlet flow meter drift versus process fluid temperature curve that is different than the inlet flow meter drift versus process fluid temperature curve and an outlet flow meter drift versus ambient temperature curve that is different from the inlet flow meter drift versus ambient temperature curve; and
a shutoff valve fluidly connected to and selectively blocking a fluid flow through the fluid conduit.

FIG. 1

FIG. 2

FIG. 3

FIG. 4

Europäisches
Patentamt

European
Patent Office

Office européen
des brevets

**EUROPEAN SEARCH REPORT**

Application Number

EP 13 15 0245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 804 990 B2 (WEBER GUNTHER [US]) 19 October 2004 (2004-10-19) * abstract; figures 1-3 * ----- | 1-15 | INV. G01F25/00 G01M3/32 |
| Y | WO 2011/019345 A1 (MICRO MOTION INC [US]; HAYS PAUL J [US]; WEINSTEIN JOEL [US]) 17 February 2011 (2011-02-17) * page 8, line 25 - page 12, line 23 * * page 13, line 9 - line 19 * * page 16, line 13 - page 27, line 32 * ----- | 1-15 | |

TECHNICAL FIELDS
SEARCHED (IPC)

G01M

The present search report has been drawn up for all claims

| Place of search | Date of completion of the search | Examiner |
|---|---|---|
| The Hague | 22 April 2013 | Vytlacilová, Lenka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 13 15 0245

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2013

| Patent document cited in search report | | Publication date | Patent family member(s) | | Publication date |
|---|---|---|---|---|---|
| US 6804990 | B2 | 19-10-2004 | NONE | | |
| WO 2011019345 | A1 | 17-02-2011 | AR | 077826 A1 | 28-09-2011 |
| | | | AU | 2009351106 A1 | 01-03-2012 |
| | | | CA | 2770135 A1 | 17-02-2011 |
| | | | CN | 102713533 A | 03-10-2012 |
| | | | EP | 2464950 A1 | 20-06-2012 |
| | | | JP | 2013501934 A | 17-01-2013 |
| | | | KR | 20120047290 A | 11-05-2012 |
| | | | SG | 178100 A1 | 29-03-2012 |
| | | | US | 2012125124 A1 | 24-05-2012 |
| | | | WO | 2011019345 A1 | 17-02-2011 |

EPO FORM P0459

For more details about this annex : see Official Journal of the European Patent Office, No. 12/82